# EUROPEAN PATENT APPLICATION

(11) **EP 2 028 587 A1**
(43) Date of publication of application: **25.02.2009**
(21) Application number: 07114975.1
(22) Date of filing: 24.08.2007
(51) Int. Cl.: G06F 3/048

(54) **Method and device for navigating a graphical user interface**

(71) Applicant: Coeno GmbH & Co KG, 81671 München (DE)
(72) Inventor: Kugler, Markus, 81543 Munchen (DE); Rotter, Bettina, 83623 Bairawies (DE)
(74) Representative: Schmit Chretien Schihin & Mahler

(57) **Abstract**

The present invention relates to user interfaces, in particular to a method and a device for navigating a graphical user interface with a remote control unit. An input device comprises a display unit for a graphical user interface comprising a plurality of menu items and a plurality of content elements, wherein the menu items are arranged in a first direction and the content elements are arranged in a second direction; input means including a first input scheme and a second input scheme; and a control unit for receiving input from the input means and for controlling the display of the user interface. The control unit shifts a first focus in the plurality of menu items in response to input from the first input scheme and a second focus in the plurality of content elements in response to input from the second input scheme.

## Description

The present invention relates to user interfaces, in particular to a method and a device for navigating a graphical user interface with a remote control unit.

Many modem consumer devices have complex functions and configurations which provides challenges to the user for operating the device. In addition, space on an input device is a valuable property given the common trend in miniaturization. Many devices have small displays for providing user information. Further, the operation of devices is often by means of small remote controls. Thus, a graphical user interface for efficient device operation is common, and there is a need for efficient operation of the user interface.

Examples of consumer devices comprising a graphical user interface displayed on a screen and operated by remote control are TV sets, VCRs, hi-fi systems, audio players, CD/DVD players, cable/satellite set top boxes, game consoles, etc. When information in the form of content elements (such as the title of a music, video or picture file or the title of a program event) is represented on a screen (TV, computer monitor and the like) it is often grouped within different categories (usually menu items) and displayed in a list or mosaic manner. The selection of a content element is done by moving a highlight, or focus from one element to another. This can result in a large amount of necessary input actions in order to select the desired content element, because the cursor or focus must be move around on the screen from one element to the next, and a list can contain large numbers of entries.

Also, when using a navigational device such as remote control, the usage of a plurality of input buttons for navigation is inconvenient as the user has to look back down onto the remote control in order to identify the key that needs to be pressed. Thereby, time is wasted while navigating the content elements. In many cases, user interface and menu structure for operating the device are different from device to device. In addition, the user has to learn and adapt to many different keyboard layouts for remote controls. One prior art approach is to provide the standard four colour keys (red, green, blue, yellow) on the remote control for navigating the menu structure. Thus, there is a need for an efficient user interface which can be navigated with a limited number of keys and a reduced number of user actions.

In many cases, a graphical user interface has two main elements: menu items representing functions and lists, and objects on which the functions are applied and which are organized in lists. Often, the objects relate to multimedia content of the audio, video, picture, music, etc type, referred to as content elements. A user interface can then be defined as a collection of linked menu items and content elements.

It is an object of the present invention to provide a method and device for efficiently navigating a graphical user interface, in particular with a remote control unit.

This object is achieved by the independent claims. The dependent claims refer to preferred embodiments of the invention.

The present invention allows a strictly eyeless operation of an input means - meaning that a user does not need to look down onto the navigational device in his hands. The claimed invention thus allows navigating through menu items and content elements in the fastest possible way. It can be implemented as a menu control device or method.

This is achieved by the usage of two completely separate focuses in the displayed menu structure. One focus is for selecting a menu item from a plurality of displayed menu items. The other focus is for selecting a content element from a plurality of displayed content elements. The menu item presently in focus and the content element presently in focus are highlighted. Dedicated keys are assigned on the input device for shifting the menu or content focus upon key actuation.

For instance, left/right and up/down input schemes may be used for navigating the user interface. Preferred input means are standard keys on a remote control unit such as navigational keys for selecting the up-, down-, left-, or right-direction; cursor keys; a rocker; a joystick; or a D(directional)-pad. These keys allow the user to specify a horizontal or vertical direction within the graphical user interface for shifting the menu focus and/or the content focus. Thus, an efficient key-based menu control for a device is achieved.

This is different from the usage of a pointing device in a graphical user interface such as Microsoft Windows where a cursor can be moved with, e.g., a mouse over the entire display screen, i.e. over sensitive desktop areas and non-sensitive desktop areas. Attached to the cursor is a single focus which may highlight a button when placed on top of it. The user can then activate the button when clicking on it. In contrast, the present invention has two (2) focuses which jump between menu items or content element upon actuation of an input scheme such as the pressing of keys.

An input device according to an aspect of the invention comprises a display unit for displaying a graphical user interface comprising a plurality of menu items and a plurality of content elements; input means including a first input scheme and a second input scheme; and a control unit for receiving input from the input means and for controlling the display of the graphical user interface. The menu items are arranged in a first direction and the content elements are arranged in a second direction, preferably perpendicular to the first direction. The control unit shifts a first focus in the plurality of menu items in response to input from the first input scheme and a second focus in the plurality of content elements in response to input from the second input scheme.

Thus, the graphical user interface has two separate focuses - one for the menu items and one for the content elements - which are independently controlled by two input schemes that are aligned in correspondence with their respectively assigned focus. For instance, a horizontal input scheme for receiving input indicating a horizontal direction such as left or right will control the focus in the horizontal direction. Likewise, a vertical input scheme for receiving input indicating a vertical direction such as up or down will control the focus in the vertical direction. This allows an intuitive operation of the input means by the device user. As the user interface has two separate focuses, navigation of the user interface, including selection of menu items and/or content elements, is possible with a reduced number of user actions such as key actuations. This is particularly useful for navigation in large content element lists where the menu focus can be shifted while the content focus is maintained on a particular content element. Thus, usability of the device is enhanced.

Preferably, the focus in the plurality of menu items causes a respective menu item to be highlighted, and the focus in the plurality of content elements causes a respective content element to be highlighted so that the user can easily identify the current menu and content focus. The focus on a menu item or content element can be considered a pre-selection of the respective item/element which is indicated by highlighting it. However, the item/element the focus is on is in general not yet treated as an entered input which is passed to a processing component. It is preferred that only after a confirmation of the pre-selected focussed item/element it is processed as final input which is processed by the system.

The first input scheme may be arranged in the first direction and configured for receiving input indicating the shift of focus for the displayed menu items in the first direction. When receiving input from the first input scheme specifying a selected shift direction, the first focus is shifted along the selected direction by highlighting the next menu item or content element in the shift direction as seen from the presently highlighted menu item or content element.

The second input scheme may be arranged in the second direction and configured for receiving input indicating the shift of focus for the displayed content elements in the second direction. When receiving input from the second input scheme specifying a selected shift direction, the second focus is shifted along the selected direction by highlighting the next menu item or content element in the shift direction as seen from the presently highlighted menu item or content element.

The shifting of focus in the first and/or second direction may be implemented such that the menu items and/or content elements are displayed on fixed positions and a highlight bar moves relative to the displayed menu items and/or content elements so that a neighbouring item and/or content element is highlighted. Preferably, the menu or content list scrolls when the highlight bar reaches a position next to a display boarder.

Alternatively, the position for the highlighted menu item or content element is at a fixed position, e.g. in the centre of the display area, and the displayed menu items or content elements scroll relative to the fixed position when an input from the first input scheme or the second input scheme is received.

It is further contemplated to combine the above focus control approaches such that in a first subarea the focus moves from one menu item or content element to the next whereas in a second subarea the position of the focus is fixed and the menu items or content elements move upon an input action.

A highlighted menu item or content element may be confirmed by activating a confirmation input scheme, such as an 'OK' button. Alternatively, the actuation of the confirmation scheme may be integrated in the operation of a joystick or rocker, e.g. by pressing the device towards the keyboard baseplate. A confirmed menu item or content element is considered a final user interface input for further processing of the system. By shifting the menu or content focus, the highlighted menu items or content elements are only preliminary selected until definitely confirmed.

According to an aspect of the invention, when receiving input from the confirmation input scheme, it is determined whether the previous input was from the first or second input scheme. If the previous input was from the first input scheme, the presently focussed menu item is confirmed. If the previous input was from the second input scheme, then the presently focussed content element is confirmed. Thus, the user can confirm a menu item or a content element depending on the sequence of input actions. This allows, e.g. navigating in the menu items (by shifting the first focus) and confirming a particular menu item while the second focus stays on a highlighted content element and vice versa. Depending on the confirmed menu item, a new list of content elements may be displayed, or depending on the confirmed content element, a new menu structure may be displayed.

Alternatively, when receiving input from the confirmation input scheme, the menu item and the content element presently in focus (i.e. highlighted) may be confirmed. This allows simultaneous confirmation of a menu item and of a content element with one actuation of the confirmation scheme. The user only has to direct the menu focus and the content focus to the respective positions with the corresponding actuations of the first and second input schemes, e.g. the up/down and left/right buttons, and then press the OK button to navigate the user interface with a minimum number of clicks.

The menu items may be organized in a hierarchical structure where the confirmation of a menu item causes the display of a sub-menu including other menu items. In each layer of the menu structure, a set of predetermined menu items are displayed.

A menu item may also relate to a function to be performed with a confirmed content element, such as play or display the content. In addition, a menu item may represent a list of content elements grouped according to a particular criterion such as topics, genres, etc.

The position of a menu item in the first direction may be determined according to its expected frequency of usage. This allows presenting more common menu items in a more prominent position, e.g. a default focus position. The default focus position is a position in the displayed set of menu items where the highlight bar is positioned when the set of menu items is initially displayed.

Similarly, the arrangement of the content elements may be optimized according to the expected frequency of usage. More frequently used content elements may be positioned at or around the default focus position for the content elements.

The optimization of content element and/or menu item positions may be static where the expected frequencies of usages are determined once and the positions fixed. Alternatively, the frequency of confirmation for menu items or content elements may be estimated during usage of the device and the arrangement of menu items or content elements dynamically optimized based on the recorded confirmation frequencies. Preferably, the arrangement of menu items or content elements is optimized such that the most frequently confirmed menu item or content element is arranged in or near the default focus position. The neighbouring menu items or content elements may be arranged in descending order of frequency. This provides for a reduced number of actuations of the first and/or second input scheme for the average user interface navigation because frequent menu items or content elements are arranged such that they are likely displayed at the default focus position where they can simply be confirmed without any necessary actuations of the first and/or second input scheme. If not displayed directly at the default focus position, frequent menu items or content elements are at least accessible with a small number of inputs.

The present invention can be used on any device that supports a graphical user interface and uses some sort of input mechanism. In general, the present invention is applicable to - but not limited to - the following classes of devices: (Digital) Video Recorders; Personal Video Recorders; Digital Media Adapters; Home Entertainment Centres; Home Entertainment Network Adapters; and Set Top Boxes.

According to a preferred embodiment, the present invention is implemented as a method for controlling a multimedia device with a (standard) remote control unit. The method for navigating the device's graphical user interface comprises the steps of: arranging the menu items in a first direction; arranging the content elements in a second direction; assigning a first input scheme to the selection of a menu item; assigning a second input scheme to the selection of a content element; shifting a first focus in the plurality of menu items in response to input from the first input scheme; and shifting a second focus in the plurality of content elements in response to input from the second input scheme,

The present invention may further be implemented as a computer program product comprising computer readable instructions for causing a computer to perform the above method when executed on the computer or (micro)-controller.

### Brief Description of the Drawings

Fig. 1 is a schematic diagram for illustrating the concept of the present invention.
Fig. 2 is a flow chart illustrating the input action processing according to an embodiment of the invention.
Fig. 3 is an illustration of an embodiment of the invention.
Fig. 4 is a flow chart illustrating the input action processing according to the embodiment shown in Fig. 4.
Fig. 5 is a flow chart illustrating the input action processing according to another embodiment of the invention.

The present invention employs two highlights or focuses. One highlight or focus is in a menu area (either on top, bottom, left or right of a content area) and a second separate highlight or focus is in a content area. These two highlights can be navigated separately from each other and represent separate navigational entities.

The concept will be illustrated in the following by referring to preferred embodiments of the invention.

Depending on the input action that is carried out, one of the two highlights or focuses is addressed:
- left and right input actions navigate items within the menu area,
- up and down input actions navigate elements within the content area.

A confirmation input action on an item in the menu area either
- results in a change of the items in the menu area or (if subordinate menu items of the confirmed menu item are available) or
- results in a change of the elements in the content area (if no subordinate menu items are available).

The highlight or focus can either
- stay steady at a fixed position or
- move from one element or item to the next.

Prior art solutions rely on at least one input action to swap between content area and menu area or use approaches that are not eyeless (e.g. use a direct number input to select a category).

The present invention supports any input device that allows selecting left, right, up, down and OK, but yields the best results when used with either a remote control carrying a directional pad and an OK button or a touch screen.

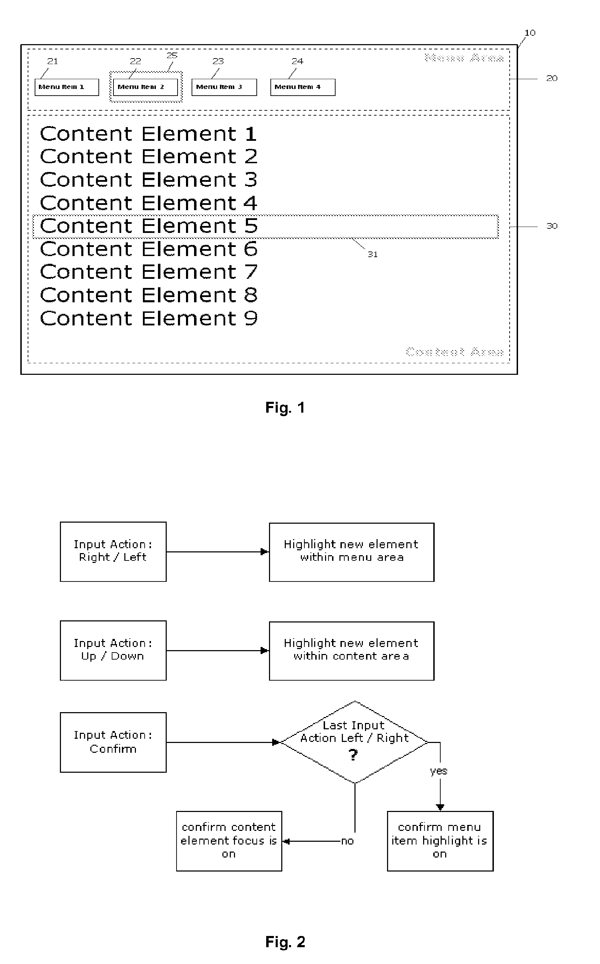

Fig. 1 shows schematically a display 10 arranged according to the present invention. The display comprises a menu area 20 and a content area 30.

Menu items 21, 22, 23, 24 are arranged horizontally in the menu area 20. Menu item 22 is schematically highlighted as the menu focus 25 is on that menu item. The menu focus 25 is changed and the highlight bar shifted upon a left or right input action, e.g. when a left or right key is actuated. The actuation of a confirmation (OK) key calls a sub-menu or changes the content in the content area 30.

The content area 30 shows content elements 1 to 9 arranged as a vertical list of elements. Content element 5 is highlighted because the content focus 31 is on it. The content focus 31 can be shifted up and down with the actuation of up or down input actions such as up/down keys. The actuation of a confirmation (OK) key calls details of a selected element or applies a function/operation on it.

The invention can be implemented in many ways resulting in a variety of embodiments. According to one embodiment, the focus position in the content area is moving up and down. Fig. 2 shows a flowchart for illustrating the processing upon actuation of an input action.

A 'right' input action (e.g. the pressing of a right-key) causes a new menu item to be highlighted. For instance, the menu focus is shifted to the right, i.e. the next menu item to the right is highlighted. Alternatively, the right menu item is moved to the focus position (e.g. the centre position of the menu area) and the other menu items displayed in the menu area are adjusted accordingly.

A 'left' input action (e.g. the pressing of a left-key) causes a new menu item to be highlighted. For instance, the menu focus is shifted to the left, i.e. the next menu item to the left is highlighted. Alternatively, the left menu item is moved to the focus position and the other menu items displayed in the menu area are adjusted accordingly.

An 'up' input action (e.g. the pressing of an up-key) causes a new content element to be highlighted. For instance, the content focus is shifted up to the previous element in the content list. Alternatively, the previous content element in the list is moved to the focus position (e.g. the centre position of the content area) and the other displayed content elements are adjusted accordingly.

A 'down' input action (e.g. the pressing of a down-key) causes a new content element to be highlighted. For instance, the content focus is shifted down to the next element in the content list. Alternatively, the next content element in the list is moved to the focus position and the other displayed content elements are adjusted accordingly.

A 'confirm' input action (e.g. the pressing of a confirmation button) confirms a menu item and/or a content element depending on the previous input action.

The invention can be implemented in many ways resulting in a variety of embodiments. According to one embodiment, the focus position in the content area is moving up and down (see Fig. 2).

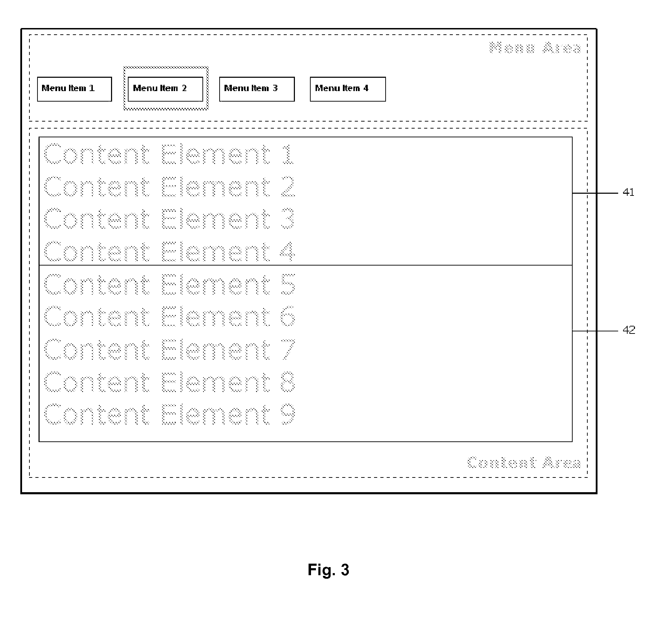

Fig. 3 visualizes subareas I, II 41, 42 in the content area 40 used in another embodiment. The movement of the focus depends in this embodiment on the subarea that he is in. When in subarea 41, the content focus/highlight follows the up/down inputs and moves up/down. When in subarea 42, the content focus is at a fixed position and the content elements scroll up/down depending on the up/down input actions. Similarly, the movement of the menu focus can depend on a subarea in the menu area that the focus is in.

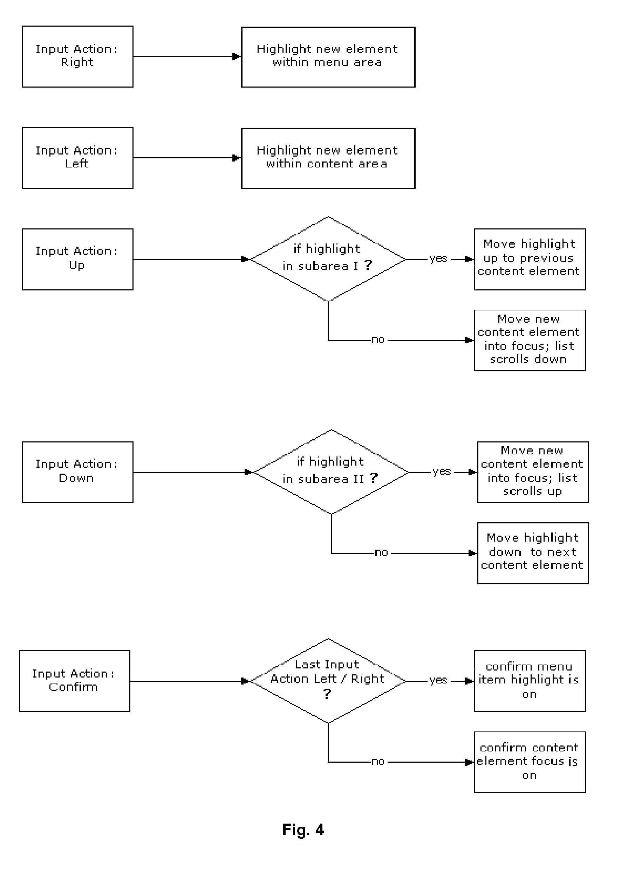

Fig. 4 shows a flow chart for illustrating the input action processing of this embodiment. This figure describes the behaviour of the focus or highlight element in the menu and content area. A right or left input action highlights a different element in the menu area by placing the menu item at the position of the focus/highlight - the focus/highlight is fixed. Alternatively, the focus is moved left or right.

An up or down input action either moves the content highlight/focus to the next element in the list or scrolls the content elements through the highlight/focus. Which action is carried out depends on the subarea 41, 42 the focus/highlight is in at the moment the input action is carried out. If the focus/highlight is within subarea I 41, the focus/highlight moves up or down. If the focus/highlight is within subarea II 42, the focus/highlight remains steady and the content scrolls through the highlight.

In detail, an 'up' input action (e.g. the pressing of an up-key) causes the content focus to be shifted up to the previous element in the content list if in subarea I. Alternatively when in subarea II, the previous content element is moved to the focus position (e.g. the centre position of the content area) and the other displayed content elements are adjusted accordingly. A 'down' input action (e.g. the pressing of a down-key) causes the content focus to be shifted down to the next element in the content list if in subarea I. Alternatively when in subarea II, the next content element is moved to the focus position and the other displayed content elements are adjusted accordingly.

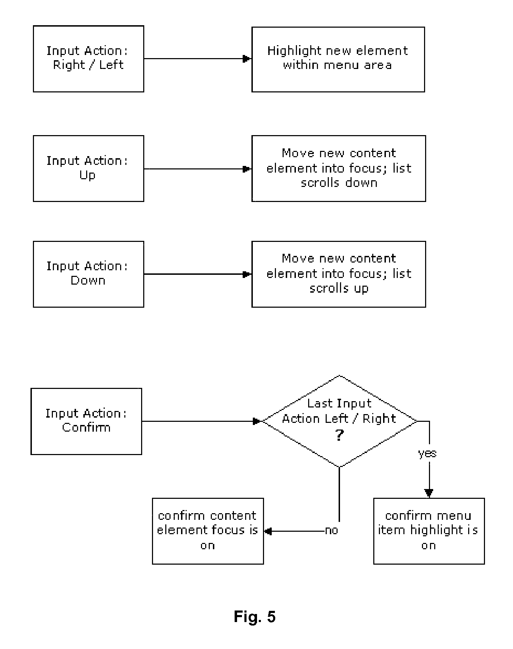

According to another embodiment, the focus position in the content section is fixed meaning that the focus in the content area is arranged at a fixed position (e.g. at the 5^{th} content element when 9 are available - in general in a position in the middle of the content area). The content elements then scroll through the focus in a continuous fashion, resembling a rotating drum. This is illustrated in Fig. 5 which shows the processing of input actions to explain the behaviour of the focus/highlight in the content section. Instead of behaving like described in figure 2 or 3, the focus/highlight is always fixed at the middle position of a content list. An up or down input action always scrolls the content elements through the focus/highlight.

According to another aspect, the menu item positions are optimized. Menu items in the menu area may be positioned due to a hierarchy defined during system design. When optimised, the menu item within a menu item hierarchy that is used the most by the average user (based on usability tests) is focused on first. For instance, the default menu focus is at position 2 (the second menu item from the left) in the menu area of Fig. 1 and the most frequently used menu item is positioned at the default menu position. The menu items that are used second and third most are placed to the left and right of the first menu item. Therefore using only the confirmation input action and/or one additional left or right input action allows the user to navigate conveniently through the top-3 contents and functionality. In this embodiment, the positioning of the menu items is predefined on a system level and cannot be changed by the user.

Alternatively, menu item positions can be learned during usage. Based on the menu item selection behaviour of a user, the system learns which menu items are preferred by the user and places them automatically in an accentuated position. The menu item within a menu item hierarchy that is used the most by the individual user is focused on first (e.g. at position 2 in the menu area of Fig. 1). The menu items that are used second and third most are placed to the left and right of the first menu item. This has the same effect as the standard optimisation and in addition allows the implicit personalization of the menu hierarchy. Which menu item is used the most is determined by the number of confirmations (frequencies) of the user. For instance, the setup of the menu items is changed based on a defined limit or threshold (e.g. 10 confirmations in 3 usage sessions).

## Claims

1. Method for navigating a user interface comprising a plurality of displayed menu items and a plurality of displayed content elements, the method comprising the steps of:
arranging the menu items in a first direction on a display;
arranging the content elements in a second direction on the display;
assigning a first input scheme to the selection of a menu item;
assigning a second input scheme to the selection of a content element;
shifting a first focus in the plurality of menu items in response to input from the first input scheme; and
shifting a second focus in the plurality of content elements in response to input from the second input scheme.

2. Method of claim 1, wherein the first input scheme is configured to receive input indicating a shift of focus in the first direction, and the second input scheme is configured to receive input indicating a shift of focus in the second direction.

3. Method of claim 1 or 2, wherein a menu item or a content element is highlighted when in focus.

4. Method of any previous claim, wherein the step of shifting the first or second focus comprises:
receiving input from the first or second input scheme specifying a selected direction; and
shifting the first or second focus along the selected direction by highlighting the next menu item or content element in the selected direction as seen from the presently highlighted menu item or content element.

5. Method of any previous claim, comprising the steps of:
receiving input from a confirmation input scheme;
determining whether the previous input was from the first or second input scheme;
if the previous input was from the first input scheme, then confirming the presently focussed menu item; and
if the previous input was from the second input scheme, then confirming the presently focussed content element.

6. Method of any of claims 1 to 4, comprising the steps of:
receiving input from a confirmation input scheme; and
confirming the menu item and the content element presently in focus.

7. Method of any previous claim, wherein the focus position for the highlighted menu item or content element is at a fixed position and the method comprises:
scrolling the displayed menu items or content elements relative to the fixed position when an input from the first input scheme or the second input scheme is received.

8. Method of any previous claim, comprising the steps of:
recording the frequency of confirmation for menu items or content elements; and
optimizing the arrangement of menu items or content elements based on the recorded confirmation frequencies.

9. Method of claim 8, wherein the arrangement of menu items or content elements is optimized such that the most frequently confirmed menu item or content element is arranged in a default focus position.

10. Method of claim 8 or 9, wherein menu items or content elements are arranged in descending order of frequency.

11. Input device comprising:
a display unit for a graphical user interface comprising a plurality of menu items and a plurality of content elements, wherein the menu items are arranged in a first direction and the content elements are arranged in a second direction;
input means including a first input scheme and a second input scheme; and
a control unit for receiving input from the input means and for controlling the display of the user interface, wherein
the control unit shifts a first focus in the plurality of menu items in response to input from the first input scheme and a second focus in the plurality of content elements in response to input from the second input scheme.

12. Device of claim 11, wherein the focus in the plurality of menu items causes a menu item to be highlighted and the focus in the plurality of content elements causes a content element to be highlighted.

13. Device according to any of claims 11 to 12, wherein the first direction is the horizontal direction and/or the second direction is the vertical direction, or vice versa.

14. Device according to any of claims 11 to 13, wherein the input means comprises one of: navigational keys for selecting the up-, down-, left-, or right-direction; cursor keys; a rocker; a joystick; and a D(directional)-pad.

15. Device according to any of claims 11 to 14, wherein the menu items are organized in a hierarchical structure.

16. Device according to any of claims 11 to 15, wherein the position of a menu item in the first direction is determined according to its expected frequency of usage.

17. Computer program product comprising computer readable instructions for causing a computer to perform the method of claims 1 to 10 when executed on the computer.
